# EUROPEAN PATENT SPECIFICATION

(11) **EP 4 163 508 B1**
(45) Date of publication and mention of the grant of the patent: **31.07.2024**
(21) Application number: 22195324.3
(22) Date of filing: 13.09.2022
(51) Int. Cl.: F16C 33/12, F16C 33/14, F16C 17/02

(54) **SLIDE BEARING AND METHOD OF PRODUCING THE SAME**
GLEITLAGER UND VERFAHREN ZU DESSEN HERSTELLUNG
PALIER LISSE ET SON PROCÉDÉ DE FABRICATION

(30) Priority: 07.10.2021 JP 2021165439
(43) Date of publication of application: 12.04.2023
(73) Proprietor: DAIDO METAL COMPANY LTD., Nagoya (JP)
(72) Inventor: HAYASHI, Masaki, Inuyama-shi (JP); IZUMIDA, Manabu, Inuyama-shi (JP); INAMI, Shigeru, Inuyama-shi (JP); ZHANG, Yi, Ilminster, TA19 9PH (GB); BAJWA, Rizwan, Ilminster, TA19 9PH (GB)
(74) Representative: Kraus & Lederer PartGmbB

(56) References cited:
- EP-A1- 3 831 516
- GB-A- 2 529 382
- US-A1- 2007 134 508
- US-B2- 9 683 604

## Description

### Technical Field

The present invention relates to a coating structure of a slide bearing, particularly used in an internal combustion engine, a piston compressor or the like. In particular, the present invention relates to a slide bearing having a coating structure exhibiting high seizure resistance when an abnormal load is applied to the slide bearing. The present invention also relates to a method of manufacturing the slide bearing.

### Background of the Invention

Many sliding members such as plain bearings for internal combustion engines include a copper or aluminum lining alloy bonded to a steel back metal. The copper alloy or the aluminum alloy allows the sliding members to have a strong surface that can withstand a load applied to the sliding members in use. Such sliding members are required to have not only good embedding properties and conformability but also appropriate seizure resistance. For this purpose, a soft coating layer is typically provided on a lining layer (bearing alloy layer) in the sliding members.

For example, JP 2002-310158A describes a multilayer sliding material in which a tin-based overlay layer including a tin-copper-based alloy is provided on a bearing alloy layer via an intermediate layer for preventing diffusion of copper. In JP 2002-310158A, in order to prevent a reduction in copper of a surface portion of the overlay layer composed of the tin-based alloy over a long period of time even if the intermediate layer does not have a large thickness, the overlay layer is composed of a plurality of layers including different amounts of copper, thereby allowing the sliding material to maintain seizure resistance.

In order to obtain high wear resistance and seizure resistance, JP H11-182549A discloses a slide bearing in which 0.3 to 25 volume % of hard particles having an average grain size of not more than 15 µm are dispersed in a main load portion of an overlay, thereby achieving high wear resistance and less occurrence of seizure.

In the environment in which a slide bearing is used, due to the operation state of the provided applications or disturbance factors, an abnormal load beyond the design assumption is occasionally applied to the slide bearing. For example, when a vehicle equipped with a slide bearing is broken down, in some cases, an abnormal load is applied to the slide bearing, causing a sudden stop of the vehicle. Assuming such a case, bearings are required to have particularly high seizure resistance. The method in which hard particles are embedded in the overlay as in JP H1 1-182549A requires mixing of the hard particles in the overlay material in advance, and this may cause limitations in the composition and manufacturing method. In order to allow a slide bearing to have high seizure resistance assuming application of an abnormal load to the slide bearing or a breakdown of a vehicle equipped with the slide bearing, substances such as hard particles are required to be appropriately mixed in the overlay material, and the properties of a base material and an additive material may cause manufacturing limitations. Furthermore, the performance of the slide bearing in normal use may be limited.

Another example for a multilayer sliding bearing is described in US9683604 B2, wherein a multilayer overlay comprises soft metallic layers separated by hard intermetallic compound layers.

### Summary of the Invention

An object of the present invention is to provide a coating structure of a slide bearing having high seizure resistance. Another object of the present invention is to provide a coating structure of a slide bearing that is easily manufactured and is low in manufacturing cost, and a method of manufacturing the coating structure of the slide bearing.

According to an aspect of the present invention, provided is a slide bearing including a base layer and a coating layer. The coating layer of the slide bearing is composed of at least two overlay layers and at least one intermediate layer (intermetallic compound containing layer), each located between adjacent ones of the at least two overlay layers. The overlay layers and the intermediate layer or layers are laminated in a thickness direction of the coating layer. The intermediate layer includes a layered metal portion in an intermetallic compound matrix. An area of the layered metal portion is 60% to 95% of an area of the intermediate layer.

According to an embodiment of the present invention, the coating layer is composed of two overlay layers and an intermediate layer located between the two overlay layers.

According to an embodiment of the present invention, the overlay layers include a Sn-Cu alloy, while the intermetallic compound layer includes a Sn-Ni intermetallic compound and a Sn-Ni-Cu intermetallic compound, and the metal portion includes metal Ni. Preferably, the Sn-Ni intermetallic compound is Ni₃Sn₄, and the Sn-Ni-Cu intermetallic compound is Sn₅(CuNi)₆.

According to an embodiment of the present invention, the intermediate layer has a thickness of 1 to 10 µm, preferably 2 to 5 µm.

According to an embodiment of the present invention, the overlay layers each have a thickness of 1 to 30 µm, preferably 5 to 20 µm.

According to an embodiment of the present invention, the base layer includes a back-metal layer and a lining layer bonded to the back-metal layer, and the coating layer is located on the lining layer. The lining layer is preferably composed of a copper-based alloy or an aluminum-based alloy.

According to an embodiment of the present invention, the slide bearing further includes a dam layer between the lining layer and the coating layer. The dam layer preferably includes at least one selected from the group consisting of nickel, cobalt, iron, copper, chromium, zinc, aluminum, and alloys thereof.

According to an embodiment of the present invention, the dam layer has a thickness of 0.5 to 10 µm, preferably 1 to 6 µm.

According to an embodiment of the present invention, the coating layer has a total thickness of 5 to 50 µm.

According to another aspect of the present invention, provided is a method of manufacturing the above slide bearing. The method includes a step of preparing the base layer, a step of applying a first layer composed of a first metal or a first alloy onto the base layer, a step of applying a second layer composed of a second metal or a second alloy onto the first layer, a step of applying another first layer composed of the first metal or the first alloy onto the second layer, optionally a step of applying at least one set of further second layer composed of the second metal or the second alloy and further first layer composed of the first metal or the first alloy onto the other first layer, and a heat treatment step. In the heat treatment step, the stacked layers are heated at a temperature that allows diffusion of metal atoms of the first layers, so that the metal atoms of the first layers diffuse into the second layer to form an intermetallic compound in the second metal or the second alloy while a part of the second metal or the second alloy remains in a metallic state.

According to an embodiment of the present invention, the base layer includes a back-metal layer and a lining layer bonded to the back-metal layer. According to an embodiment of the present invention, the method further includes a step of applying a dam layer onto the lining layer.

The present invention and its advantages will be described in detail below with reference to the accompanying drawings. The drawings illustrate non-limiting embodiments merely for illustration purpose.

### Brief Description of Drawings

Fig. 1 is a schematic cross-sectional view of a slide bearing according to an embodiment of the present invention.
Fig. 2 is a schematic cross-sectional view of a slide bearing according to another embodiment of the present invention.
Fig. 3 is a schematic diagram showing a metal portion extending in a direction parallel to a sliding surface.
Fig. 4 is a graph comparing the time for the occurrence of seizure in a sample of the present invention and in a comparison sample in a seizure test.

### Description of the Embodiments

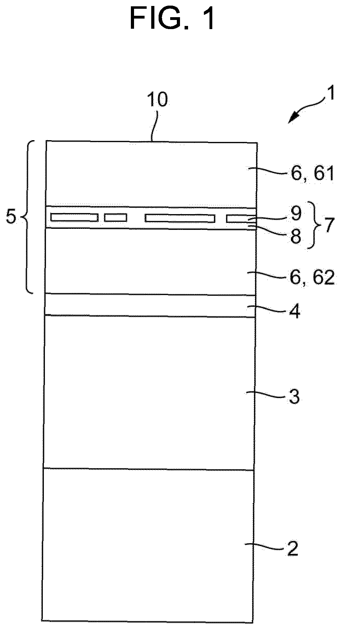

Fig. 1 is a schematic diagram of a cross-sectional structure of an example of a slide bearing 1 of the present invention. The slide bearing 1 includes a base layer composed of a back metal 2 and a lining layer (bearing alloy layer) 3 bonded to the back metal, optionally a dam layer (diffusion blocking layer) 4 applied on the lining layer, and a coating layer 5 applied on the dam layer. The coating layer 5 has a structure in which a first overlay layer 61, an intermediate layer 7, and a second overlay layer 62 are laminated. A surface of the first overlay layer 61 constitutes a sliding surface 10. The intermediate layer 7 includes a metal portion 9 composed of a metal in an intermetallic compound matrix 8 composed of an intermetallic compound. The metal portion 9 extends substantially parallel to the sliding surface 10 in a layered manner, and is divided by the intermetallic compound matrix 8. An area of the layered metal portion 9 is 60% to 95% of an area of the intermediate layer 7. Preferably, the area of the layered metal portion 9 is 70% to 90% of the area of the intermediate layer 7.

Preferably, the back metal 2 may be composed of any appropriate material such as steel, bronze, or an aluminum alloy.

The lining layer 3 may be composed of any appropriate material. In practice, it is composed of a copper alloy or an aluminum alloy.

When the slide bearing 1 is used at high temperature for a long period of time, the thermal effect causes diffusion between the lining layer 3 and the coating layer 5. Thus, in order to prevent the diffusion, it is preferable to provide the dam layer 4 in the slide bearing 1. The dam layer 4 includes at least one selected from the group consisting of nickel, cobalt, iron, copper, chromium, zinc, aluminum, and alloys thereof, and is applied onto the lining layer by a conventional coating method. When the lining layer is composed of a copper alloy, the dam layer is preferably composed of nickel. The dam layer may not necessarily include or be composed of a metal or an alloy, and may include or be composed of an intermetallic compound. In the case where an intermetallic compound is formed by heat treatment (described later), the dam layer may have a multilayer structure such as a two-layer structure including a layer composed of a metal or an alloy and an intermetallic compound layer.

The dam layer 4 typically has a thickness in a range of 0.5 to 10 µm, and preferably in a range of 1 to 6 µm. The thickness of the dam layer 4 is determined according to its purpose. For example, when the dam layer 4 has a large thickness, the slide bearing can have a good bearing alloy function, and when the dam layer 4 has a small thickness, the slide bearing can have good conformability even when the coating layer 5 is worn.

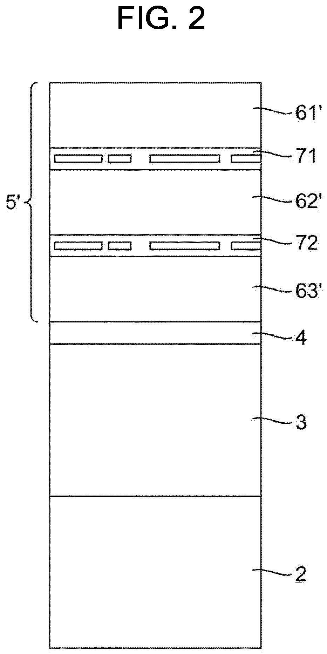

The present invention is not limited to this example where the coating layer 5 has a structure in which the first overlay layer 61, the intermediate layer 7, and the second overlay layer 62 are laminated. According to an embodiment of the present invention, the coating layer 5 may include three or more overlay layers, and include intermediate layers between the overlay layers. Fig. 2 is a schematic diagram of a cross-sectional structure of another example of the slide bearing 1 in which a coating layer 5' includes three overlay layers 61', 62', and 63' and two intermediate layers 71 and 72. In this example, in addition to the coating layer 5', the slide bearing 1 includes the back metal 2, the lining layer 3, and the dam layer 4 as described above.

Although not shown, it is needless to say that a coating layer including four or more overlay layers is also included in the scope of the present invention.

The plurality of overlay layers 6 of the coating layer 5 may have the same composition or different compositions. The overlay layers 6 may include at least one of tin, bismuth, lead, silver, indium, gold, antimony, aluminum, and alloys thereof. The overlay layers 6 can be applied by a conventional coating method.

The overlay layers 6 may include one or more kinds of soft particles selected from the group consisting of PTFE particles, fluorinated polymer particles, metal sulfide particles, metal fluoride particles, metal sulfate particles, graphite particles, other soft carbonaceous particles, hexagonal boron nitride particles, layered silicate particles, titanium oxide particles, zinc oxide particles, lead oxide particles, and other particles having a hexagonal crystal structure. Furthermore, the overlay layers 6 may include one or more kinds of hard particles selected from the group consisting of metal oxide particles, boride particles, carbide particles, nitride particles, sulfate particles, silicide particles, diamond particles, carbon nanotube particles, graphene particles, other hard carbonaceous particles, and other particles having a cubic crystal structure.

When the coating layer 5 includes a plurality of intermediate layers 7, the intermetallic compound matrices 8 in the intermediate layers 7 may have the same composition or different compositions, and the metal portions 9 may have the same composition or different compositions. The intermetallic compound matrices 8 can be formed by applying a metal layer onto the overlay layers 6 by a conventional coating method, followed by heat treatment. The intermetallic compound matrices 8 are required to include at least two elements. One of the at least two elements is selected from the group consisting of tin, bismuth, lead, silver, indium, gold, antimony, and aluminum, and the other one or more elements may be selected from the group consisting of nickel, cobalt, zinc, silver, iron, copper, chromium, cadmium, and aluminum.

The intermetallic compound matrix 8 and/or the metal portion 9 may include one or more kinds of soft particles selected from the group consisting of PTFE particles, fluorinated polymer particles, metal sulfide particles, metal fluoride particles, metal sulfate particles, graphite particles, other soft carbonaceous particles, hexagonal boron nitride particles, layered silicate particles, titanium oxide particles, zinc oxide particles, lead oxide particles, and other particles having a hexagonal crystal structure. Furthermore, the intermetallic compound matrix 8 and/or the metal portion 9 may include one or more kinds of hard particles selected from the group consisting of metal oxide particles, boride particles, carbide particles, nitride particles, sulfate particles, silicide particles, diamond particles, carbon nanotube particles, graphene particles, other hard carbonaceous particles, and other particles having a cubic crystal structure.

The metal portion 9 in the intermediate layer 7 of the coating layer 5 may be composed of a material selected from nickel, cobalt, zinc, silver, iron, copper, chromium, cadmium, aluminum, and the like. The metal portion may be composed of a pure metal or an alloy.

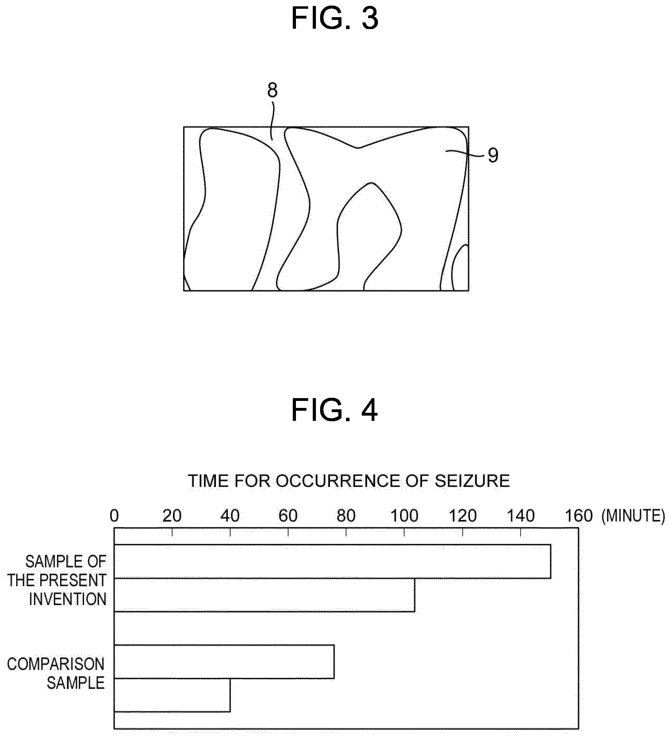

The metal portion 9 extends substantially parallel to the sliding surface 10 to form a layer or a thin piece, and is divided by the intermetallic compound matrix. Fig. 3 is a schematic diagram showing the metal portion 9 extending in a direction parallel to the sliding surface 10. Portions of the layered metal portion 9 are not substantially overlapped in a direction perpendicular to the sliding surface 10. The area of the layered metal portion 9 is 60% to 95% of the area of the intermediate layer 7, and preferably 70% to 90%. The area of the layered metal portion 9 indicates the area of the metal portion 9 projected on the sliding surface 10 when an image of the metal portion 9 is projected on the sliding surface 10. The area of the intermediate layer 7 is equal to the area of the sliding surface (the area ratio of the layered metal portion 9 to the intermediate layer 7 is measured by cross-sectional observation as described below).

The area ratio of the layered metal portion 9 to the intermediate layer 7 is determined by observing a cross-section of the slide bearing using an optical microscope or a scanning electron microscope (SEM) to measure the length of the metal portion 9 in a direction parallel to the sliding surface 10, and obtaining the ratio of the length of the metal portion 9 to the length of the intermediate layer 7. The obtained ratio is equal to the area ratio of the layered metal portion 9 to the intermediate layer 7.

In the slide bearing of the present invention, the coating layer 5 has a multilayer structure. When an abnormal load is applied to the slide bearing, the intermediate layer 7 is divided due to the load, and this achieves high seizure resistance. Even when the uppermost overlay layer is worn, the intermetallic compound protects the layers under the uppermost overlay layer from wear and seizure. At that time, cracking presumably occurs at portions of the intermetallic compound at which the metal portion 9 is divided. Thus, even when a large friction force is applied to the intermediate layer, the entire intermediate layer is not simultaneously peeled off, but only part of the intermediate layer is peeled off. The portion of the intermetallic compound at which the metal portion 9 is divided can be controlled by adjusting heat treatment time for a product, and this makes it possible to control the size of portions into which the intermetallic compound is divided. The size of the portions into which the intermetallic compound is divided can be controlled appropriately according to the thickness and material of the overlay layers 6, the number of overlay layers 6, and the like. The appropriate size of the portions into which the intermetallic compound is divided is preferably 0.1 to 30 µm, and more preferably 1 to 20 µm.

Although the size of the portions of the intermetallic compound at which the metal portion 9 is divided is controlled according to the thickness and material of the overlay layers 6, the number of overlay layers 6, and the like required for the intended use of the bearing, the metal portion 9 provided in a discontinuous manner allows, in any case, that portions of the intermetallic compound matrix 8 and portions of the metal portion 9 are alternately arranged, thus enabling the slide bearing to exhibit high seizure resistance when an abnormal load is applied to the slide bearing.

In the present invention, the coating layer 5 has a laminated multilayer coating structure composed of the thin layers, i.e., the overlay layers 6 and the intermediate layer 7 including the intermetallic compound matrix 8 and the metal portion 9. The laminated coating structure allows the coating layer 5 to have the layers with a small thickness while maintaining the total thickness of the coating layer 5 equivalent to the thickness of a single layer. This achieves much less accumulation of plastic deformation under external loading, and thus allows the coating to have better fatigue performance.

The intermediate layer 7 has a thickness in a range of 1 to 10 µm, and preferably in a range of 2 to 5 µm. Such a structure allows the intermediate layer 7 to include the best metal portion 9, thus enabling the bearing to have high seizure resistance. Although not particularly defined, the metal portion 9 preferably has a thickness of 0. 1 to 0.5 µm in order to achieve the above effect. The metal portion 9 having an excessively large thickness leads to a small amount of intermetallic compound, and the above effect is less likely to be obtained. Thus, the thickness of the metal portion 9 is preferably not more than 30% of the thickness of the intermediate layer 7.

The overlay layers 6 each have a thickness in the range of 1 to 30 µm, and preferably in the range of 5 to 20 µm. The thickness of the overlay layers 6 is determined according to the purpose. For example, when an overlay layer 6 has a large thickness, the slide bearing has good conformability and foreign matter embedding properties on the sliding surface. When an overlay layer 6 has a small thickness, the slide bearing has high fatigue resistance on the sliding surface. When all the overlay layers 6 have a large thickness, the slide bearing has extremely good conformability and foreign matter embedding properties. When all the overlay layers 6 have a small thickness, the slide bearing has extremely high fatigue resistance. The multilayer structure of the coating layer 5 ensures the thickness of the coating layer 5 as a whole, and this allows the slide bearing to continuously have good conformability and foreign matter embedding properties.

Next, a method of manufacturing the slide bearing of the present invention is described. First, a base layer (preferably a back-metal layer to which a lining layer is bonded) is prepared. Then, a dam layer is optionally applied onto the base layer. Then, a first layer composed of a first metal or a first alloy is applied onto the dam layer. A second layer composed of a second metal or a second alloy is applied onto the first layer, and another first layer composed of the first metal or the first alloy is applied onto the second layer. Optionally, one or more sets of further second layer composed of the second metal or the second alloy and further first layer composed of the first metal or the first alloy are applied. The layers may be applied to each other by a conventional method such as plating or PVD. Next, the member is heat treated. The intermetallic compound described above is formed by the heat treatment. The heat treatment causes metal atoms of the first layers to be diffused and reacted in the second layer to form an intermetallic compound. However, the heat treatment temperature and time are adjusted so that the second metal or the second alloy is not completely converted into an intermetallic compound but remains in a layered manner such that the area ratio (defined above) of the second metal or the second alloy is 60% to 95%.

The heat treatment is advantageously performed at a temperature of 100°C to 250°C, and preferably at 150°C to 180°C. If the thermal diffusion temperature is higher than the above range, the crystal structure of the overlay layers may be changed and affect the tribological properties of the overlay layers. If the thermal diffusion temperature is lower than the above range, a long treatment time is required, leading to high manufacturing cost. The time for the thermal diffusion process is adjusted according to the configuration of the coating, but is advantageously 2 hours to 60 hours, and preferably 12 hours to 36 hours.

According to the present invention, the manufacturing method using thermal diffusion can avoid complicated chemical process management and reduce the harmful internal stress, thus achieving better quality control and product performance.

### Examples

A preferable embodiment is described merely as an example.

Onto a steel back metal with a thickness of 1.2 mm, CuPb22Sn (22 mass% of Pb, 1.5 mass% of Sn, and the balance of Cu), Ni, SnCu3 (3 mass% of Cu, and the balance of Sn), Ni, and SnCu3 with the thicknesses shown in Table 1 were sequentially applied by plating. Next, the stacked member was heat treated twice at 165°C for 8 hours (16 hours in total) to produce a sample of a slide bearing having the structure shown in Fig. 1. By the heat treatment, SnCu3 was reacted with Ni to form intermetallic compounds Sn₅(CuNi)₆ and Ni₃Sn₄. Ni was divided, but a layered Ni portion having a maximum thickness of approximately 0.5 µm remained. The area ratio of the Ni layer was approximately 80%. Table 2 shows the thicknesses of the layers after the heat treatment.

**[Table 1]**

| | Components | Thickness of applied materials |
|---|---|---|
| First overlay layer | SnCu3 | 10µm |
| Metal portion | Ni | 1 µm |
| Intermetallic compound | - | - |
| Second overlay layer | SnCu3 | 10µm |
| Dam layer | Ni | 3µm |
| Lining layer | CuPb22Sn | 0.3mm |

**[Table 2]**

| | Components | Thickness after heat treatment |
|---|---|---|
| First overlay layer | SnCu3 | 9µm |
| Intermetallic compound layer7 (Metal portion9) | Sn₅(CuNi)₆+Ni₃Sn₄ (Ni) | 3µm (0.1∼0.5 µm) |
| Second overlay layer | SnCu3 | 9µm |
| Dam layer | Ni,Sn₅(CuNi)₆+Ni₃Sn₄ | 2µm |
| Lining layer | CuPb22Sn | 0.3mm |

### Seizure test

An example sample of the present invention having the structure shown in Table 2 was subjected to a seizure test to examine seizure resistance of the sample. In order to produce a comparison sample, CuPb22Sn (a lining layer) with a thickness 0.3 mm, Ni (a dam layer) with a thickness 2 µm, and SnCu3 (a coating layer) with a thickness 20 µm were sequentially applied onto a steel back metal with a thickness 0.7 mm, by plating or the like. The comparison sample differed in configuration from the sample of the present invention in that the coating layer of the comparison sample was a single layer composed of a Sn-Cu alloy.

The seizure test was performed using a ring-on-disk tester under oil starvation conditions. Table 3 shows the test conditions. The test was performed by the following method.

A flat test sample having a test portion with an outer diameter of ϕ27 mm and an inner diameter of ϕ22 mm was prepared and placed under an annular counter member to be rotated. On the back side of the test sample, the test sample had a lubrication oil filler opening from which lubrication oil was supplied. A hydraulic device was provided on the underside of the test sample to apply hydraulic pressure to the counter member and to measure the friction torque and the back surface temperature of the test sample.

First, the counter member was rotated without applying pressure, and the rotational speed was gradually increased. When the peripheral speed of the counter member reached 2 m/s and the back surface temperature of the sample reached 130°C, the test load was increased to 10 MPa at a pace of 2 MPa every 2 minutes. When the load applied to the test sample by the counter member reached 10 MPa, the supply of lubrication oil was stopped and the test was started. When the friction torque exceeded 5 Nm or the back surface temperature exceeded 200°C, it was determined that seizure occurred in the sample.

Fig. 4 shows the results of the seizure test. In the comparison sample, seizure occurred in approximately 40 minutes to 75 minutes, and in the slide bearing of the present invention, seizure occurred in 103 minutes to 140 minutes.

**[Table 3]**

| | |
|---|---|
| Test sample: shape and test portion | Flat |
| | Test portion: annular shape with outer diameter of ϕ27 mm and inner diameter of ϕ22 mm |
| Test load | 10MPa |
| Peripheral speed | 2m/s |
| Lubrication oil | SAE 10 |
| Back surface temperature of test sample | 130°C |
| Material of counter member | S55C |
| Hardness of counter member | 500∼600 Hv10 |
| Roughness of counter member | Ra < 0.1µm |
| Maximum test time | 200min |

## Claims

1. A slide bearing (1) comprising a base layer and a coating layer (5; 5'),
wherein the coating layer (5; 5') is composed of
at least two overlay layers (6, 61, 62; 61', 62', 63') and
at least one intermediate layer (7; 71, 72), each located between adjacent ones of the at least two overlay layers (6, 61, 62; 61', 62', 63'),
**characterised in that**
the intermediate layer (7; 71, 72) comprises a layered metal portion (9) in an intermetallic compound matrix (8), an area percentage of the layered metal portion (9) being 60% to 95% of an area of the intermediate layer (7; 71, 72).

2. The slide bearing according to claim 1, wherein the coating layer (5) is composed of two overlay layers (6, 61, 62) and one intermediate layer (7) located between the two overlay layers (6, 61, 62).

3. The slide bearing according to claim 1 or 2, wherein the overlay layers (6, 61, 62; 61', 62', 63') comprise a Sn-Cu alloy, and
wherein the intermetallic compound matrix (8) comprises a Sn-Ni intermetallic compound and a Sn-Ni-Cu intermetallic compound, and the metal portion (9) comprises metal Ni.

4. The slide bearing according to claim 3, wherein the Sn-Ni intermetallic compound is Ni₃Sn₄, and the Sn-Ni-Cu intermetallic compound is Sn₅(CuNi)₆.

5. The slide bearing according to any one of the preceding claims, wherein the intermediate layer (7; 71, 72) has a thickness of 1 to 10 µm, preferably 2 to 5 µm.

6. The slide bearing according to any one of the preceding claims, wherein the overlay layers (6, 61, 62; 61', 62', 63') each have a thickness of 1 to 30 µm, preferably 5 to 20 µm.

7. The slide bearing according to any one of the preceding claims, wherein the base layer comprises a back-metal layer (2) and a lining layer (3) bonded on the back-metal layer (2), the coating layer (5; 5') being located on the lining layer (3).

8. The slide bearing according to claim 7, wherein the lining layer (3) is composed of a copper-based alloy or an aluminum-based alloy.

9. The slide bearing according to claim 7 or 8, further comprising a dam layer (4) between the lining layer (3) and the coating layer (5; 5'), the dam layer (4) comprising at least one selected from the group consisting of nickel, cobalt, iron, copper, chromium, zinc, aluminum, and alloys thereof.

10. The slide bearing according to claim 9, wherein the dam layer (4) has a thickness of 0.5 to 10 µm, preferably 1 to 6 µm.

11. The slide bearing according to any one of the preceding claims, wherein the coating layer (5; 5') has a total thickness of 5 to 50 µm.

12. A method of manufacturing the slide bearing (1) according to any one of the preceding claims, the method comprising:
preparing the base layer;
applying a first layer composed of a first metal or a first alloy onto the base layer;
applying a second layer composed of a second metal or a second alloy onto the first layer;
applying another first layer composed of the first metal or the first alloy onto the second layer;
optionally, applying at least one set of further second layer and further first layer; and
heat-treating the layers at a temperature that allows diffusion of metal atoms of the first layers, so that the metal atoms of the first layers diffuse into the second layer to form an intermetallic compound in the second layer while a part of the second metal or the second alloy remains in the second layer as a metallic state.

13. The method according to claim 12, wherein the base layer comprises a back-metal layer (2) and a lining layer (3) bonded onto the back-metal layer (2).

14. The method according to claim 13, further comprising a step of applying a dam layer (4) onto the lining layer (3).

## Patentansprüche

1. Gleitlager (1) umfassend eine Grundschicht und eine Überzugsschicht (5; 5'),
wobei die Überzugsschicht (5; 5') aus folgenden Bestandteilen besteht:
mindestens zwei Deckschichten (6, 61, 62; 61', 62', 63') und
mindestens eine Zwischenschicht (7; 71, 72), die jeweils zwischen benachbarten der mindestens zwei Deckschichten (6, 61, 62; 61', 62', 63') liegt,
**dadurch gekennzeichnet, dass** die Zwischenschicht (7; 71, 72) einen geschichteten Metallteil (9) in einer Matrix aus einer intermetallischen Verbindung (8) umfasst, ein Flächenprozentsatz von des geschichteten Metallteils (9) 60 % bis 95 % einer Fläche der Zwischenschicht (7; 71, 72) beträgt.

2. Gleitlager nach Anspruch 1, wobei die Überzugsschicht (5) aus zwei Deckschichten (6, 61, 62) und einer zwischen den beiden Deckschichten (6, 61, 62) angeordneten Zwischenschicht (7) besteht.

3. Gleitlager nach Anspruch 1 oder 2, wobei die Deckschichten (6, 61, 62; 61', 62', 63') eine Sn-Cu-Legierung umfassen, und
wobei die Matrix aus einer intermetallischen Verbindung (8) eine intermetallische Sn-Ni-Verbindung und eine intermetallische Sn-Ni-Cu-Verbindung umfasst, und der Metallteil (9) Metall Ni umfasst.

4. Gleitlager nach Anspruch 3, wobei die intermetallische Sn-Ni-Verbindung Ni₃Sn₄ und die intermetallische Sn-Ni-Cu-Verbindung Sn₅(CuNi)₆ ist.

5. Gleitlager nach einem der vorhergehenden Ansprüche, wobei die Zwischenschicht (7; 71, 72) eine Dicke von 1 bis 10 um, vorzugsweise 2 bis 5 um, aufweist.

6. Gleitlager nach einem der vorhergehenden Ansprüche, wobei die Deckschichten (6, 61, 62; 61', 62', 63') jeweils eine Dicke von 1 bis 30 um, vorzugsweise 5 bis 20 µm aufweisen.

7. Gleitlager nach einem der vorhergehenden Ansprüche, wobei die Grundschicht eine Rückseitenmetallschicht (2) und eine an die Rückseitenmetallschicht (2) gebundene Auskleidungsschicht (3) umfasst, wobei die Überzugsschicht (5; 5') auf der Auskleidungsschicht (3) angeordnet ist.

8. Gleitlager nach Anspruch 7, wobei die Auskleidungsschicht (3) aus einer kupfer-basierten Legierung oder einer aluminium-basierten Legierung besteht.

9. Gleitlager nach Anspruch 7 oder 8, das ferner eine Dämmschicht (4) zwischen der Auskleidungsschicht (3) und der Überzugsschicht (5; 5') umfasst, wobei die Dämmschicht (4) mindestens ein Element umfasst, das aus der Gruppe ausgewählt ist, die aus Nickel, Kobalt, Eisen, Kupfer, Chrom, Zink, Aluminium und deren Legierungen besteht.

10. Gleitlager nach Anspruch 9, wobei die Dämmschicht (4) eine Dicke von 0,5 bis 10 um, vorzugsweise 1 bis 6 um, aufweist.

11. Gleitlager nach einem der vorhergehenden Ansprüche, wobei die Überzugsschicht (5; 5') eine Gesamtdicke von 5 bis 50 µm aufweist.

12. Verfahren zur Herstellung des Gleitlagers (1) nach einem der vorhergehenden Ansprüche, wobei das Verfahren umfasst:
Vorbereitung der Grundschicht;
Aufbringen einer ersten Schicht, die aus einem ersten Metall oder einer ersten Legierung besteht, auf die Grundschicht;
Aufbringen einer zweiten Schicht, die aus einem zweiten Metall oder einer zweiten Legierung besteht, auf die erste Schicht;
Aufbringen einer weiteren ersten Schicht, die aus dem ersten Metall oder der ersten Legierung besteht, auf die zweite Schicht;
optional Aufbringen mindestens eines Satzes weiterer zweiter Schicht und weiterer erster Schicht; und
Wärmebehandlung der Schichten bei einer Temperatur, die die Diffusion von Metallatomen der ersten Schichten ermöglicht, so dass die Metallatome der ersten Schichten in die zweite Schicht diffundieren, um eine intermetallische Verbindung in der zweiten Schicht zu bilden, während ein Teil des zweiten Metalls oder der zweiten Legierung in der zweiten Schicht als metallischer Zustand verbleibt.

13. Verfahren nach Anspruch 12, wobei die Grundschicht eine Rückseitenmetallschicht (2) und eine an die Rückseitenmetallschicht (2) gebundene Auskleidungsschicht (3) umfasst.

14. Verfahren nach Anspruch 13, das ferner einen Schritt des Aufbringens einer Dämmschicht (4) auf die Auskleidungsschicht (3) umfasst.

## Revendications

1. Palier lisse (1) comprenant une couche de base et une couche de revêtement (5 ; 5'),
dans laquelle la couche de revêtement (5 ; 5') est composée de :
au moins deux couches de recouvrement (6, 61, 62 ; 61', 62', 63') et
au moins une couche intermédiaire (7 ; 71, 72), chacune située entre les couches adjacentes des au moins deux couches de recouvrement (6, 61, 62 ; 61', 62', 63'),
**caractérisée par le fait que** la couche intermédiaire (7 ; 71, 72) comprend une partie métallique en couches (9) dans une matrice de composé intermétallique (8), un pourcentage de surface de la partie métallique en couches (9) étant de 60 % à 95 % d'une surface de la couche intermédiaire (7 ; 71, 72).

2. Palier lisse selon la revendication 1, dans lequel la couche de revêtement (5) est composée de deux couches de recouvrement (6, 61, 62) et d'une couche intermédiaire (7) située entre les deux couches de recouvrement (6, 61, 62).

3. Palier lisse selon la revendication 1 ou 2, dans lequel les couches de recouvrement (6, 61, 62 ; 61', 62', 63') comprennent un alliage Sn-Cu, et
dans lequel la matrice de composé intermétallique (8) comprend un composé intermétallique Sn-Ni et un composé intermétallique Sn-Ni-Cu, et la partie métallique (9) comprend du métal Ni.

4. Palier lisse selon la revendication 3, dans lequel le composé intermétallique Sn-Ni est Ni₃Sn₄, et le composé intermétallique Sn-Ni-Cu est Sn₅(CuNi)₆.

5. Palier lisse selon l'une des revendications précédentes, dans lequel la couche intermédiaire (7 ; 71, 72) a une épaisseur de 1 à 10 um, de préférence de 2 à 5 um.

6. Palier lisse selon l'une des revendications précédentes, dans lequel les couches de recouvrement (6, 61, 62 ; 61', 62', 63') ont chacune une épaisseur de 1 à 30 um, de préférence de 5 à 20 µm.

7. Palier lisse selon l'une des revendications précédentes, dans lequel la couche de base comprend une couche de métal arrière (2) et une couche de doublure (3) collée sur la couche de métal arrière (2), la couche de revêtement (5 ; 5') étant située sur la couche de doublure (3).

8. Palier lisse selon la revendication 7, dans lequel la couche de doublure (3) est composée d'un alliage à base de cuivre ou d'un alliage à base d'aluminium.

9. Palier lisse selon la revendication 7 ou 8, comprenant en outre une couche de barrage (4) entre la couche de doublure (3) et la couche de revêtement (5 ; 5'), la couche de barrage (4) comprenant au moins un élément choisi dans le groupe constitué par le nickel, le cobalt, le fer, le cuivre, le chrome, le zinc, l'aluminium et leurs alliages.

10. Palier lisse selon la revendication 9, dans lequel la couche de barrage (4) a une épaisseur de 0,5 à 10 um, de préférence de 1 à 6 µm.

11. Palier lisse selon l'une des revendications précédentes, dans lequel la couche de revêtement (5 ; 5') a une épaisseur totale de 5 à 50 µm.

12. Méthode de fabrication du palier lisse (1) selon l'une des revendications précédentes, comprenant
la préparation de la couche de base ;
appliquer une première couche composée d'un premier métal ou d'un premier alliage sur la couche de base ;
appliquer une deuxième couche composée d'un deuxième métal ou d'un deuxième alliage sur la première couche ;
appliquer une autre première couche composée du premier métal ou du premier alliage sur la deuxième couche ;
éventuellement, appliquer au moins un ensemble d'autres deuxième couche et première couche ; et
traitement thermique des couches à une température permettant la diffusion des atomes de métal des premières couches, de sorte que les atomes de métal des premières couches se diffusent dans la deuxième couche pour former un composé intermétallique dans la deuxième couche, tandis qu'une partie du deuxième métal ou du deuxième alliage reste dans la deuxième couche à l'état métallique.

13. Méthode selon la revendication 12, dans laquelle la couche de base comprend une couche de métal arrière (2) et une couche de doublure (3) collée sur la couche de métal arrière (2).

14. Méthode selon la revendication 13, comprenant en outre une étape d'application d'une couche de barrage (4) sur la couche de doublure (3).
